(19) **Europäisches Patentamt / European Patent Office / Office européen des brevets**

(11) **EP 1 579 176 B1**

(12) **FASCICULE DE BREVET EUROPEEN**

(45) Date de publication et mention
de la délivrance du brevet:
**23.09.2009 Bulletin 2009/39**

(21) Numéro de dépôt: **03813612.3**

(22) Date de dépôt: **18.12.2003**

(51) Int Cl.:
$G01C\ 19/56^{(2006.01)}$   $G01C\ 19/00^{(2006.01)}$

(86) Numéro de dépôt international:
**PCT/EP2003/051053**

(87) Numéro de publication internationale:
**WO 2004/057270 (08.07.2004 Gazette 2004/28)**

(54) **GYROMÈTRE VIBRANT AVEC ASSERVISSEMENT DE LA FRÉQUENCE DE DÉTECTION SUR LA FRÉQUENCE D'EXCITATION**

**VIBRATIONS-RATENKREISEL MIT STEUERUNG UND ANPASSUNG DER DETEKTIONSFREQUENZ AUF DIE ERREGUNGSFREQUENZ**

**VIBRATING RATE GYRO WITH CONTROL AND MATCHING OF DETECTION FREQUENCY TO EXCITATION FREQUENCY**

(84) Etats contractants désignés:
**CH DE FR GB IT LI**

(30) Priorité: **20.12.2002 FR 0216365**

(43) Date de publication de la demande:
**28.09.2005 Bulletin 2005/39**

(73) Titulaire: **Thales
92200 Neuilly Sur Seine (FR)**

(72) Inventeurs:
• **GALLON, Pierre
F-94117 Arcueil (FR)**
• **CHAUMET, Bernard
F-94117 Arcueil (FR)**

(74) Mandataire: **Beylot, Jacques
Marks & Clerk France
Conseils en Propriété Industrielle
Immeuble " Visium "
22, avenue Aristide Briand
94117 Arcueil Cedex (FR)**

(56) Documents cités:
**EP-A- 0 642 216         EP-A- 1 554 542
WO-A-98/15799         US-A- 5 747 690
US-A- 5 992 233         US-B1- 6 253 612**

• **MOCHIDA Y ET AL: "A micromachined vibrating rate gyroscope with independent beams for the drive and detection modes" MICRO ELECTRO MECHANICAL SYSTEMS, 1999. MEMS '99. TWELFTH IEEE INTERNATIONAL CONFERENCE ON ORLANDO, FL, USA 17-21 JAN. 1999, PISCATAWAY, NJ, USA,IEEE, US, 17 janvier 1999 (1999-01-17), pages 618-623, XP010321778 ISBN: 0-7803-5194-0**

# EP 1 579 176 B1

**Description**

L'invention concerne un gyromètre vibrant.

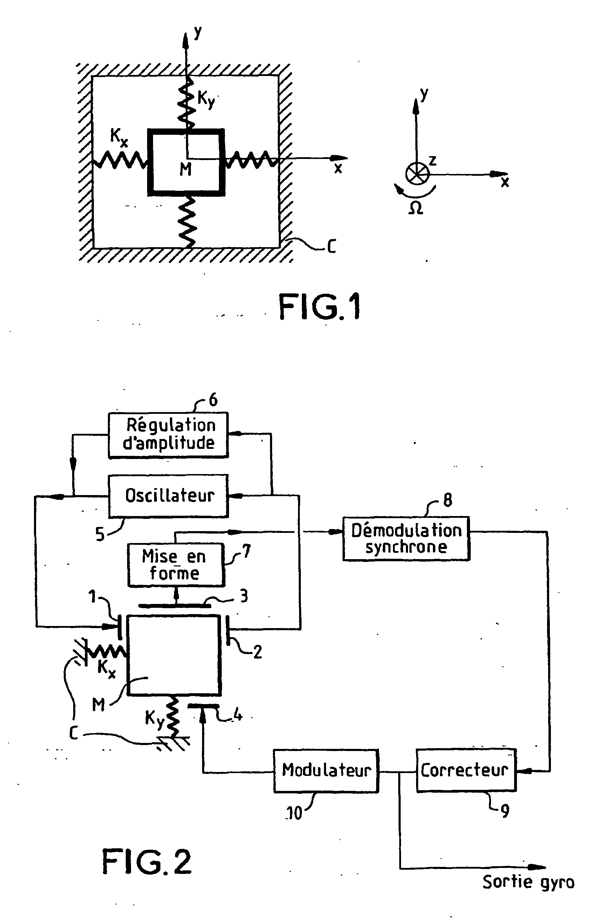

On rappelle le principe de fonctionnement d'un gyromètre vibrant en relation avec la figure 1.

Une masse M est suspendue sur un cadre rigide C par l'intermédiaire de deux ressorts de raideur Kx et Ky. Elle possède donc deux degrés de liberté suivant les directions x et y.

Le système peut être considéré comme un ensemble de deux résonateurs de fréquence propre Fx selon x et Fy selon y.

La masse M est excitée à sa fréquence propre Fx selon l'axe x.

En présence d'une vitesse de rotation $\Omega$ autour du troisième axe z, les forces de Coriolis provoquent un couplage entre les deux résonateurs engendrant une vibration de la masse selon l'axe y.

L'amplitude du mouvement selon y est alors proportionnelle à la vitesse de rotation $\Omega$.

Cette amplitude est également fonction de la différence des fréquences propres Fx et Fy : la sensibilité maximale est atteinte lorsque les deux fréquences propres sont égales.

En particulier, pour les gyromètres de haute performance, il est nécessaire d'obtenir une sensibilité maximale du déplacement par rapport à la vitesse de rotation. Il est donc très souhaitable de rendre ces fréquences égales.

Mais lorsque la condition d'égalité des fréquences est atteinte, la bande passante du gyromètre devient très faible. Pour l'augmenter, on asservit le mouvement de détection selon y en appliquant sur la masse une force électrostatique ou électromagnétique selon l'axe y qui contrebalance la force créée par le couplage de Coriolis. Il n'y a plus de vibration de la masse suivant y et c'est alors la force de contre-réaction proportionnelle à la vitesse de rotation $\Omega$ qui est mesurée.

Il est donc souhaitable pour les gyromètres vibrants les plus performants de réaliser un asservissement suivant l'axe y et d'obtenir la coïncidence des fréquences Fx et Fy.

Cependant, les dispersions dues au mode de réalisation ne permettent pas d'obtenir par la fabrication un écart de fréquence parfaitement nul. Pour égaliser les deux fréquences il est donc nécessaire de réaliser un ajustement.

Une première méthode consiste à rendre ces fréquences égales par un équilibrage mécanique. Il s'agit alors de modifier par un enlèvement de matière localisé les caractéristiques de masse ou de raideur de l'un ou l'autre des résonateurs. Cette méthode peut être utilisée pour réaliser un réglage initial grossier des fréquences.

Une autre méthode consiste à réaliser un équilibrage électrique. Par l'intermédiaire d'électrodes, on ajoute une raideur électrostatique (ou électromagnétique) variable sur un des deux résonateurs de façon à faire varier sa fréquence propre. Cette méthode permet de réaliser un réglage initial très fin des fréquences à partir d'une tension électrique appliquée sur les électrodes.

Dans le cas où l'on utilise un gyromètre dont les fréquences ont été initialement réglées par l'une de ces méthodes, le réglage initial de coïncidence des fréquences de résonance mécanique Fx et Fy ne peut être conservé à long terme et dans toutes les conditions d'environnement.

En effet des phénomènes parasites mélaniques et les phénomènes de thermoélasticité ne sont pas rigoureusement identiques pour les deux résonateurs et peuvent conduire à une différenciation des fréquences lorsque les conditions d'environnement mécanique et thermique évoluent.

Un but important de l'invention est donc de proposer un gyromètre vibrant permettant que le réglage initial de coïncidence des fréquences de résonance mécanique Fx et Fy puisse être conservé à long terme et dans toutes les conditions d'environnement.

Pour atteindre ces buts, l'invention propose un gyromètre comportant au moins une masse M apte à vibrer selon un axe x à une fréquence de résonance d'excitation Fx et apte à vibrer suivant un axe y perpendiculaire à l'axe x, à une fréquence de résonance de détection Fy, sous l'effet d'une force de Coriolis engendrée par une rotation autour d'un axe z perpendiculaire aux axes x et y, principalement caractérisé en ce qu'il comporte relié à la (ou les) masse(s) M, une boucle d'asservissement de la fréquence de résonance Fy de manière à ce que Fy soit égale ou quasiment égale à Fx pendant la durée d'utilisation du gyromètre.

Cette boucle d'asservissement permet ainsi d'obtenir un asservissement permanent de la raideur Ky pour obtenir l'égalité des fréquences propres Fx et Fy selon les deux directions.

Selon une caractéristique de l'invention, il comprend un générateur d'un signal de perturbation de la vibration de la masse M suivant y, relié à la masse M, et la boucle d'asservissement comprend des moyens de modification de la fréquence de résonance de détection Fy, des moyens de détection de la variation induite par le signal de perturbation, sur la vibration de la masse M suivant y, un signal d'erreur représentatif du décalage entre Fx et Fy étant déduit de cette variation, et des moyens de commande des moyens de modification de Fy, la commande étant établie à partir du signal d'erreur.

Selon un premier mode de réalisation de l'invention, le générateur du signal de perturbation est relié à la masse M via les moyens de modification de Fy.

Selon un autre mode de réalisation, le gyromètre comportant des moyens d'excitation de la masse M suivant y visant à contrebalancer la vibration suivant y engendrée par la force de Coriolis, le générateur du signal de perturbation est relié à la masse M via ces moyens d'excitation.

Le document WO 98 15 799 décrit un capteur de vitesse angulaire dont les oscillations primaires et secondaires sont mutuellement découplées. L'équilibrage des fréquences intrinsèques des oscillations est réalisé par un ajustement électronique de la fréquence intrinsèque de l'oscillation secondaire, obtenu en appliquant par rétroaction, une tension sur les électrodes de l'oscillateur secondaire.

Le document US 5 992 233 propose un gyromètre micro-usiné utilisé pour mesurer la vitesse de rotation autour d'un axe z perpendiculaire au plan XY du gyromètre. Un équilibrage des fréquences de résonance selon les axes X et Y est réalisé en appliquant une tension entre la masse et les électrodes de détection.

Le document US 5 747 690 décrit microgyroscope vibrant. Un équilibrage des fréquences de résonance selon des axes X et Y du plan du gyromètre est obtenu en appliquant une tension sur les électrodes de détection ou sur une électrode additionnelle.

L'article de Mochida Y et Al présente un micro-gyroscope vibrant comportant des poutres indépendantes pour les modes d'excitation et de détection. Cet article concerne la mesure du couplage entre ces modes dans le cas d'un gyroscope dont le décalage des fréquences est ajusté avec une tension.

Le document EP-A-1-554 542 décrit un gyroscope à toupie qui comporte un résonateur produisant une force de perturbation sans effet sur la fréquence de la vibration d'excitation et visant à asservir la fréquence de la vibration de détection sur la fréquence de la vibration d'excitation.

D'autres caractéristiques et avantages de l'invention apparaîtront à la lecture de la description détaillée qui suit, faite à titre d'exemple non limitatif et en référence aux dessins annexés dans lesquels :

la figure 1 illustre schématiquement le principe de fonctionnement d'un gyromètre vibrant,

la figure 2 représente schématiquement les principaux composants nécessaires relatifs à une seule masse d'un gyromètre selon l'état de la technique,

la figure 3 représente schématiquement une courbe représentative de la variation de l'amplitude (en dB) du signal |Udety| de détection du mouvement de la masse suivant y, en fonction de la fréquence en Hz du signal d'excitation Uexcy selon l'état de la technique,

les figures 4a) et 4b) représentent schématiquement les courbes représentatives du signal (en l'occurrence une tension) de commande de la modulation de fréquence (fig 4a) et du signal de perturbation Uexcy modulé en fréquence autour de la fréquence centrale Fx à la fréquence $F_0$ (fig 4b), exprimés en fonction du temps,

les figures 5a), 5b), 5c) représentent schématiquement selon que Fy>Fx, Fy=Fx ou Fy<Fx, les courbes correspondant à celles des figures 3 et 4a) ainsi que la variation correspondante de l'amplitude du signal de détection Δ|Udety|,

la figure 6a) représente schématiquement le signal de détection Udety dont l'enveloppe représente Δ|Udety|, dans le cas où Fx≠Fy ; un signal de référence de démodulation de fréquence $F_0$, et un signal d'erreur e sont respectivement schématiquement représentés figures 6b) et 6c),

la figure 7 représente schématiquement les principaux composants nécessaires relatifs à une seule masse d'un exemple de gyromètre selon l'invention,

la figure 8 représente schématiquement les principaux composants nécessaires relatifs à une seule masse d'un autre exemple de gyromètre selon l'invention.

Les gyromètres vibrants de haute précision comportent généralement deux masses symétriques vibrantes fonctionnant dans un mode dit diapason.

Sur les capteurs micro-usinés, le mouvement d'excitation est généralement assuré par des forces électrostatiques suivant la direction x. Ces forces sont souvent créées au moyens de peignes électrostatiques.

Le mouvement de détection se fait selon une direction y perpendiculaire à x. Dans le cas de capteurs micro-usinés réalisés dans une structure plane, cette direction y peut suivant les cas être dans le plan de la structure plane ou perpendiculaire à ce plan.

On a représenté figure 2, les principaux composants nécessaires relatifs à une seule masse, pour des raisons de simplicité.

De manière classique, des moyens sont prévus :

- pour appliquer des forces d'excitation selon la direction x et pour détecter le mouvement des masses suivant x de manière à asservir ces forces d'excitation,
- pour détecter le mouvement des masses suivant les directions y,
- pour appliquer des forces de contre-réaction sur les masses suivant y, ces forces étant destinées à contrebalancer les forces créées par le couplage de Coriolis selon y.

Ces moyens sont généralement constitués par des jeux d'électrodes. Les résonateurs x et y comportent donc différents types d'électrodes :

- des électrodes d'excitation 1 permettant d'appliquer une force d'excitation selon x proportionnelle à une tension de commande Uexcx, et des électrodes de détection 2 fournissant une tension de détection Udetx proportionnelle au mouvement en x,
- des électrodes de détection 3 fournissant une tension de détection Udety proportionnelle au mouvement en y,
- des électrodes de contre-réaction 4 qui sont en fait des électrodes d'excitation permettant d'appliquer une force de contre-réaction sur le résonateur y proportionnelle à une tension de commande Uexcy.

Les moyens de détection 2 du mouvement de la masse en x sont reliés aux moyens 1 pour appliquer des forces d'excitation selon la direction x par un oscillateur 5 et un dispositif 6 de régulation d'amplitude disposé en parallèle avec l'oscillateur 5.

Une boucle de contre-réaction ou d'excitation en y comporte les éléments suivants. Les moyens de détection 3 du mouvement de la masse en y sont reliés aux moyens 4 pour appliquer des forces de contre-réaction selon la direction y par un dispositif 7 de mise en forme, en série avec un démodulateur synchrone 8, un correcteur 9 puis un modulateur 10. Le signal de sortie du gyromètre provient du correcteur 9.

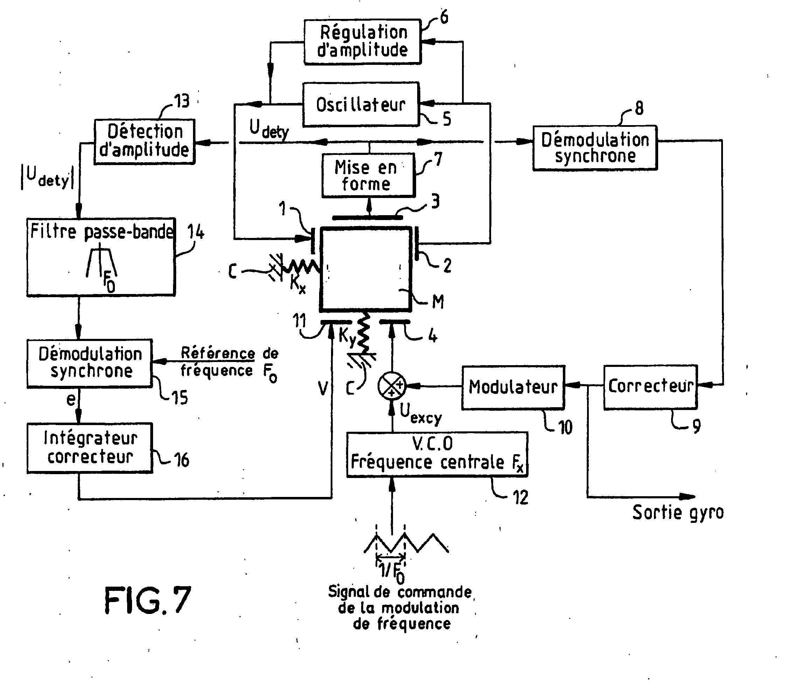

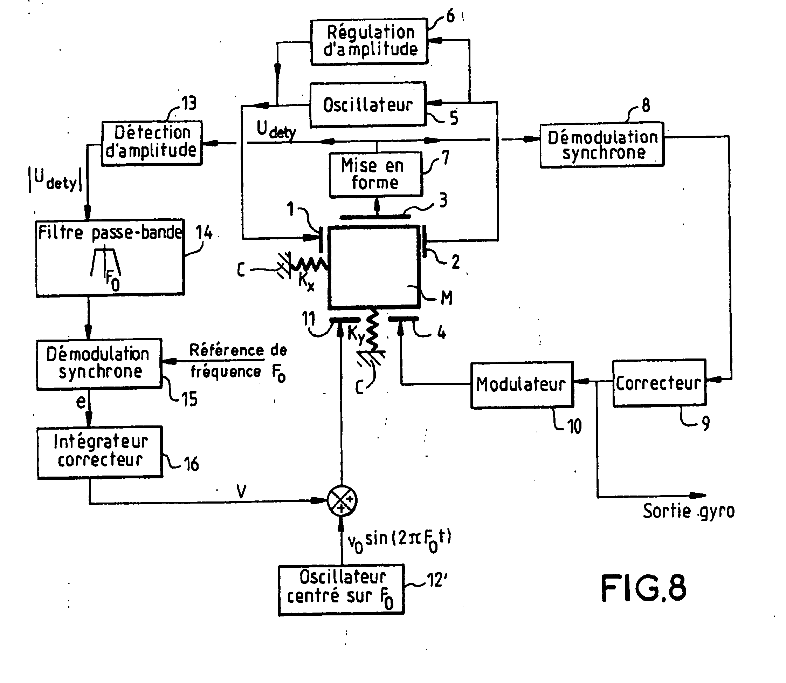

Le but de l'invention est de concevoir un asservissement permanent de Fy en contrôlant par exemple la raideur Ky, de manière à obtenir l'égalité des fréquences propres Fy et Fx. Pour cela on propose une boucle d'asservissement qui comporte des moyens de modification 11 de Fy (représentés figures 7 et 8) tels que par exemple des électrodes de contrôle de la raideur Ky, qui sont commandés à partir d'un signal d'erreur représentatif du décalage entre Fx et Fy. Le signal d'erreur est déterminé de la manière suivante.

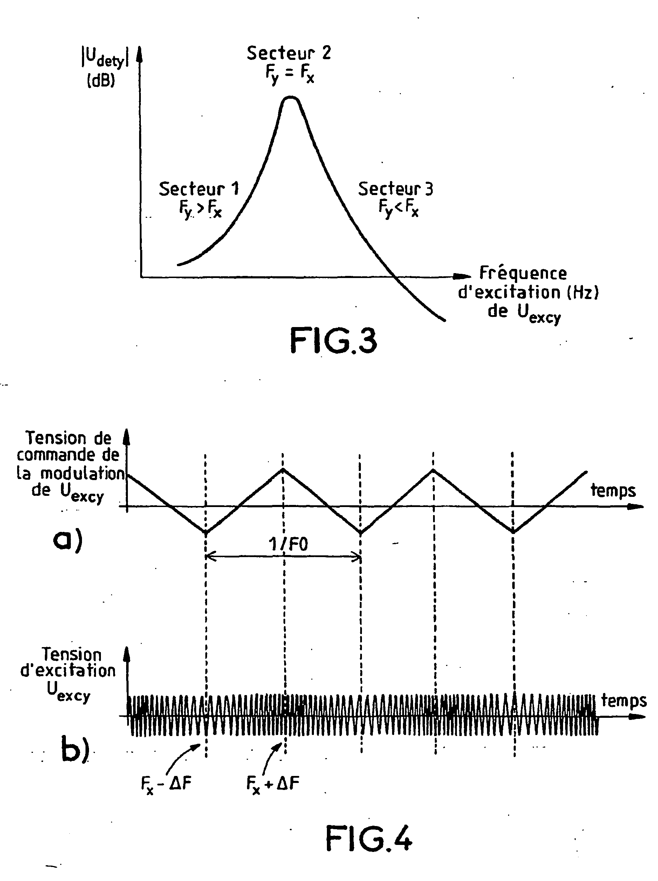

La figure 3 représente schématiquement une courbe représentative de la variation de l'amplitude (en dB) du signal |Udety| issu des électrodes de détection du mouvement de la masse suivant y, en fonction de la fréquence en Hz du signal d'excitation Uexcy appliqué sur les électrodes d'excitation. Cette courbe est maximale lorsque Fx = Fy et décroît sinon.

En perturbant la fréquence du signal d'excitation Uexcy, c'est-à-dire en appliquant sur la masse une force de perturbation suivant Oy, on obtient une perturbation du signal de détection du mouvement de la masse suivant y, représentative du signal d'erreur.

La force de perturbation est engendrée en appliquant sur l'électrode 4 d'excitation en y, une tension de perturbation Uexcy modulée en fréquence autour de la fréquence centrale Fx à la fréquence $F_0$ de la forme suivante

$$U_{excy} = U_{exc0} \sin\left(2\pi\left(F_x + \Delta F \sin(2\pi F_0 t)\right)t\right)$$

UexcO étant une constante.

Uexcy est représentée figure 4b) et obtenue en appliquant à un oscillateur un signal (en l'occurrence une tension) de commande de la modulation de fréquence représentée figure 4a).

On a indiqué sur la figure 4b) certaines fréquences de Uexcy.

En pratique la modulation de fréquence n'est pas forcément sinusoïdale mais triangulaire. $F_0$ est choisie supérieure à la bande passante du gyromètre, mais très inférieure à Fx. On a par exemple ΔF égal à environ 10% Fx.

Selon que la fréquence de résonance Fy est inférieure, égale ou supérieure à la fréquence d'excitation Fx, les variations de l'amplitude du signal de détection |Udety| sueront différentes :

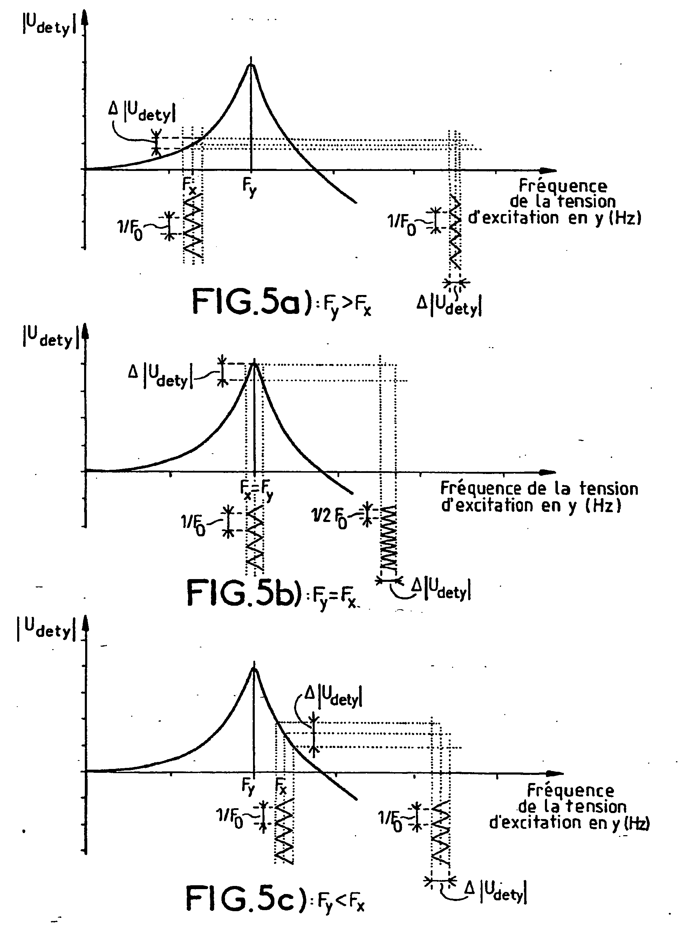

$$\text{si Fy>Fx,} \quad \Delta\left|U_{\det y}\right| = u\sin(2\pi F_0 t) \quad \text{(secteur 1, représenté figure 5a)}$$

$$\text{si Fy=Fx,} \quad \Delta\left|U_{\det y}\right| = u\sin(4\pi F_0 t) \quad \text{(secteur 2, représenté figure 5b)}$$

$$\text{si Fy<Fx,} \quad \Delta\left|U_{\det y}\right| = -u\sin(2\pi F_0 t) \quad \text{(secteur 3, représenté figure 5c)}$$

Ces variations de l'amplitude du signal de détection |Udety| sont ainsi représentatives du décalage entre Fx et Fy : on en déduit le signal d'erreur e.

Selon le secteur considéré, l'amplitude du signal d'erreur est un signal de fréquence $F_0$ en phase avec le signal de commande (secteur 1) ou en opposition de phase (secteur 3) ou un signal de fréquence $2F_0$ (secteur 2).

Ces trois cas de figures sont respectivement illustrés sur les figures 5a), 5b) et 5c). On a représenté dans chaque cas, la même courbe que celle de la figure 3 ainsi que la variation du signal de commande de la modulation de fréquence de Uexcy comme représenté figure 4a), et la variation correspondante de l'amplitude du signal de détection $\Delta|Udety|$ dont est déduit le signal d'erreur e.

Dans le cas de la figure 5a) où Fx<Fy, $\Delta|Udety|$ est un signal de fréquence $F_0$ en phase avec le signal de commande.

Dans le cas de la figure 5b) où Fx=Fy, $\Delta|Udety|$ est un signal de fréquence $2F_0$.

Dans le cas de la figure 5c) où Fx>Fy, $\Delta|Udety|$ est un signal de fréquence $F_0$ en opposition de phase avec le signal de commande.

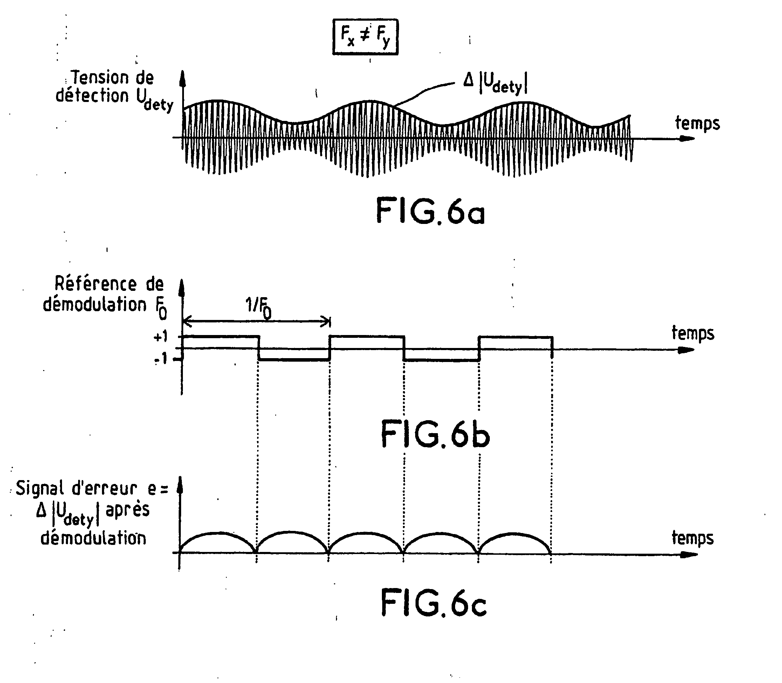

On a représenté figure 6a) le signal de détection Udety dont l'enveloppe représente $\Delta|Udety|$, dans le cas où Fx $\neq$ Fy ; un signal de référence de démodulation de fréquence $F_0$, et le signal d'erreur e issu du dispositif de démodulation synchrone 15 sont respectivement représentés figures 6b) et 6c).

On va à présent décrire un gyromètre selon l'invention. Il comporte comme représenté figure 7, en plus des éléments décrits en relation avec la figure 2 et repérés par les mêmes références, un générateur 12 d'un signal de perturbation de la vibration de la masse suivant y relié à la masse M, et une boucle d'asservissement de la fréquence de résonance Fy sur la fréquence Fx.

La force de perturbation est engendrée en appliquant sur l'électrode 4 d'excitation en y, au moyen du générateur 12 tel qu'un oscillateur commandé en tension (" Voltage Controlled Oscillator " ou " VCO " en anglais), relié à la boucle d'excitation en y, une tension de perturbation Uexcy modulée en fréquence autour de la fréquence centrale Fx à la fréquence $F_0$. Le signal de commande de l'oscillateur est celui de la figure 4a).

La boucle d'asservissement comporte les éléments suivants.

On récupère au moyen d'un détecteur d'amplitude 13, l'amplitude du signal Udety après mise en forme par un dispositif de mise en forme 7 du signal issu des électrodes 3 de détection. Ce détecteur 13 fournit |Udety| et après passage de |Udety| dans un filtre 14 passe-bande étroit autour de $F_0$ puis dans un démodulateur 15 de fréquence de référence à $F_0$, on dispose d'un signal d'erreur e qui devient nul lorsque la fréquence Fy devient égale à Fx.

Après intégration au moyen d'un intégrateur-correcteur 16, ce signal d'erreur peut commander une tension V sur l'électrode de raideur 11 modifiant la raideur Ky et donc la fréquence Fy.

La fréquence propre Fy de la masse M suivant y est donc bien asservie sur la fréquence propre Fx suivant X.

Dans le cas décrit précédemment, on a appliqué une force de perturbation sur la masse suivant y, en effectuant une modulation sur la fréquence du signal d'excitation.

Plutôt que de moduler la fréquence d'excitation, il est possible selon une variante de l'invention de moduler l'amplitude de la raideur électrostatique.

On applique alors sur l'électrode de raideur 11 une tension $V + v_0 \sin(2\pi F_0 t)$ ; l'effet sur le signal de détection est alors équivalent à celui obtenu par une modulation de la fréquence du signal d'excitation.

On a représenté figure 8 le gyromètre correspondant à cette variante. La force de perturbation est alors engendrée en appliquant sur l'électrode de raideur 11 en y, la tension de perturbation $v_0 \sin(2\pi F_0 t)$ générée par un oscillateur (12') centré sur la fréquence $F_0$, relié à la boucle d'asservissement de Fy sur Fx. La boucle d'asservissement est la même que celle décrite en relation avec la figure 7.

Les différents éléments décrits en relation avec les figures 2, 7 et 8 peuvent bien sûr être réalisés suivant une technologie analogique ou numérique.

Le gyromètre vibrant selon l'invention peut être à structure plane ou à trois dimensions ; il peut être micro-usiné ou non.

**Revendications**

**1.** Gyromètre comportant au moins une masse (M) apte à vibrer selon un axe x à une fréquence de résonance d'excitation Fx et apte à vibrer suivant un axe y perpendiculaire à l'axe x, à une fréquence de résonance de détection Fy, sous l'effet d'une force de Coriolis engendrée par une rotation autour d'un axe z perpendiculaire aux axes x et y, le gyromètre comportant reliés à la masse (M), un générateur d'un signal de perturbation de la vibration de la masse (M) suivant y, et une boucle d'asservissement de la fréquence de résonance Fy de manière à ce que Fy soit égale ou quasiment égale à Fx pendant la durée d'utilisation du gyromètre, la boucle d'asservissement comprenant des moyens (11) de modification de la fréquence de résonance de détection Fy,
des moyens (3) de détection de la variation induite par le signal de perturbation, sur la vibration de la masse (M) suivant y, un signal d'erreur e représentatif du décalage entre Fx et Fy étant déduit de cette variation,
des moyens (16) de commande des moyens (11) de modification de Fy, la commande étant établie à partir du signal d'erreur e,
**caractérisé en ce que** le générateur du signal de perturbation est relié à la masse (M) via les moyens (11) de modification de Fy.

2. Gyromètre selon la revendication précédente, **caractérisé en ce que** le générateur du signal de perturbation est relié aux moyens (11) de modification de Fy via la boucle d'asservissement.

3. Gyromètre selon la revendication 1 ou 2, **caractérisé en ce que** le générateur du signal de perturbation est un oscillateur (12') de fréquence de référence $F_0$ prédéterminée.

4. Gyromètre selon l'une quelconque des revendications 1 à 3, **caractérisé en ce que,** le gyromètre présentant une bande passante de fréquence prédéterminée, le signal de perturbation est un signal périodique de fréquence $F_0$, $F_0$ étant supérieure à la bande passante de fréquence du gyromètre, et inférieure à Fx.

5. Gyromètre selon la revendication 1, comportant des moyens (4) d'excitation de la masse (M) suivant y visant à contrebalancer la vibration suivant y engendrée par la force de Coriolis, **caractérisé en ce que** le générateur du signal de perturbation est relié à la masse (M) via ces moyens (4) d'excitation.

6. Gyromètre selon la revendication précédente, **caractérisé en ce qu'**il comporte une boucle d'excitation en y et **en ce que** le générateur du signal de perturbation est relié aux moyens (4) d'excitation via la boucle d'excitation en y.

7. Gyromètre selon la revendication 5 ou 6, **caractérisé en ce que** le générateur du signal de perturbation est un oscillateur (12) commandé en tension.

8. Gyromètre selon l'une quelconque des revendications 5 à 7, **caractérisé en ce que** le gyromètre présentant une bande passante de fréquence prédéterminée, le signal de perturbation est un signal périodique dont la fréquence varie entre Fx - $\Delta$F et Fx + $\Delta$F selon une fréquence $F_0$, $F_0$ étant supérieure à la bande passante de fréquence du gyromètre, et inférieure à Fx, $\Delta$F étant égal à environ 10% Fx.

9. Gyromètre selon l'une quelconque des revendications 7 à 8, **caractérisé en ce que** les moyens (4) d'excitation comportent des électrodes.

10. Gyromètre selon l'une quelconque des revendications 3 à 9, **caractérisé en ce que** la boucle d'asservissement comprend en outre reliés en série, des moyens (7) de mise en forme du signal issu des moyens (3) de détection, un dispositif de détection d'amplitude (13), un filtre (14) passe-bande autour de la fréquence de référence $F_0$, un démodulateur (15) synchrone de fréquence de référence $F_0$, et un intégrateur-correcteur (16) relié aux moyens (11) de modification de la fréquence Fy.

11. Gyromètre selon l'une quelconque des revendications précédentes, **caractérisé en ce que**, la masse (M) étant reliée à un cadre rigide (C) au moyen de ressorts selon x et y de raideur respective Kx et Ky, les moyens (11) de modification de la fréquence de résonance Fy comportent des électrodes de contrôle de la raideur Ky.

12. Gyromètre selon l'une quelconque des revendications précédentes, **caractérisé en ce que** les moyens (3) de détection de la variation induite sur la vibration de la masse suivant y comportent des électrodes.

13. Gyromètre selon l'une quelconque des revendications 3 à 12, **caractérisé en ce que** le signal de perturbation étant un signal périodique de fréquence de reférence $F_0$ prédéterminée, ce signal de perturbation est un signal sinusoïdal ou triangulaire.

14. Gyromètre selon l'une quelconque des revendications précédentes, **caractérisé en ce que** le gyromètre est un gyromètre micro-usiné à structure plane et **en ce que** les axes x et y sont dans le plan de la structure plane.

15. Gyromètre selon l'une quelconque des revendications 1 à 13, **caractérisé en ce que** le gyromètre est un gyromètre micro-usiné à structure plane et **en ce que** l'axe x est dans le plan de la structure plane, et l'axe y n'est pas dans le plan de la structure plane.

**Claims**

1. Gyroscope comprising at least one mass (M) capable of vibrating along an x axis at a resonant excitation frequency $F_x$ and capable of vibrating along a y axis perpendicular to the x axis, at a resonant detection frequency $F_y$, under the effect of a Coriolis force generated by a rotation about a z axis perpendicular to the x and y axes, the gyroscope comprising, connected to the mass (M), a signal generator for generating a signal that disturbs the vibration of the mass (M) along y, and a feedback control loop for controlling the resonant frequency $F_y$ so that $F_y$ is equal or practically equal to $F_x$ throughout the duration of use of the gyroscope, the feedback control loop comprising:

   - means (11) for modifying the resonant detection frequency $F_y$;
   - means (3) for detecting the variation induced by the disturbing signal on the vibration of the mass (M) along y, an error signal e representative of the difference between $F_x$ and $F_y$ being deduced from this variation; and
   - control means (16) for controlling the $F_y$-modifying means (11), the control being established on the basis of the error signal e,

   **characterized in that** the disturbing-signal generator is connected to the mass (M) via the $F_y$-modifying means (11).

2. Gyroscope according to the preceding claim,
   **characterized in that** the disturbing-signal generator is connected to the $F_y$-modifying means (11) via the feedback control loop.

3. Gyroscope according to Claim 1 or 2, **characterized in that** the disturbing-signal generator is an oscillator (12') of predetermined reference frequency $F_0$.

4. Gyroscope according to any one of Claims 1 to 3, **characterized in that,** since the gyroscope has a predetermined bandwidth, the disturbing signal is a periodic signal of frequency $F_0$, where $F_0$ is above the bandwidth of the gyroscope but below $F_x$.

5. Gyroscope according to Claim 1, which includes excitation means (4) for exciting the mass (M) along y, with the aim of counterbalancing the vibration along y generated by the Coriolis force, **characterized in that** the disturbing-signal generator is connected to the mass (M) via these excitation means (4).

6. Gyroscope according to the preceding claim, **characterized in that** it includes a y excitation loop and **in that** the disturbing-signal generator is connected to the excitation means (4) via the y excitation loop.

7. Gyroscope according to Claim 5 or 6, **characterized in that** the disturbing-signal generator is a voltage-controlled oscillator (12).

8. Gyroscope according to any one of Claims 5 to 7, **characterized in that,** since the gyroscope has a predetermined bandwidth, the disturbing signal is a periodic signal, the frequency of which varies between $F_x - \Delta F$ and $F_x + \Delta F$ according to a frequency $F_0$, where $F_0$ is above the bandwidth of the gyroscope but below $F_x$, $\Delta F$ being equal to about 10% of $F_x$.

9. Gyroscope according to any one of Claims 7 to 8, **characterized in that** the excitation means (4) comprise electrodes.

10. Gyroscope according to any one of Claims 3 to 9, **characterized in that** the feedback control loop furthermore comprises, connected in series, means (7) for shaping the signal output by the detection means (3), an amplitude detection device (13), a band-pass filter (14) centred around the reference frequency $F_0$, a synchronous demodulator (15) for synchronizing with the reference frequency $F_0$, and an integrator/corrector (16) that is connected to the means (11) for modifying the frequency $F_y$.

11. Gyroscope according to any one of the preceding claims, **characterized in that,** since the mass (M) is connected to a rigid frame (C) by means of springs along x and y, of respective stiffness $K_x$ and $K_y$, the means (11) for modifying the resonant frequency $F_y$ comprise electrodes for controlling the stiffness $K_y$.

12. Gyroscope according to any one of the preceding claims, **characterized in that** the means (3) for detecting the variation induced in the vibration of the mass along y comprise electrodes.

**13.** Gyroscope according to any one of Claims 3 to 12, **characterized in that**, when the disturbing signal is a periodic signal of predetermined reference frequency $F_0$, this disturbing signal is a sinusoidal or triangular signal.

**14.** Gyroscope according to any one of the preceding claims, **characterized in that** it is a micromachined gyroscope having a plane structure and **in that** the x and y axes lie in the plane of the plane structure.

**15.** Gyroscope according to any one of Claims 1 to 13, **characterized in that** it is a micromachined gyroscope having a plane structure and **in that** the x axis lies in the plane of the plane structure and the y axis does not lie in the plane of the plane structure.


**Patentansprüche**

**1.** Gyrometer, das mindestens eine Masse (M) aufweist, die gemäß einer x-Achse mit einer Anregungs-Resonanzfrequenz Fx und gemäß einer y-Achse lotrecht zur x-Achse mit einer Erfassungs-Resonanzfrequenz Fy unter der Wirkung einer Coriolis-Kraft schwingen kann, die durch eine Drehung um eine z-Achse lotrecht zu den x- und y-Achsen erzeugt wird, wobei das Gyrometer mit der Masse (M) verbunden einen Generator eines Störsignals der Schwingung der Masse (M) gemäß y und eine Regelschleife der Resonanzfrequenz Fy aufweist, derart, dass Fy während der Nutzungsdauer des Gyrometers gleich oder praktisch gleich Fx ist, wobei die Regelschleife enthält Einrichtungen (11) zur Veränderung der Erfassungs-Resonanzfrequenz Fy, Einrichtungen (3) zur Erfassung der durch das Störsignal an der Schwingung der Masse (M) gemäß y induzierten Veränderung, wobei ein für die Verschiebung zwischen Fx und Fy repräsentatives Fehlersignal e aus dieser Veränderung abgeleitet wird, Einrichtungen (16) zur Steuerung der Einrichtungen (11) zur Veränderung von Fy, wobei die Steuerung ausgehend vom Fehlersignal e aufgebaut wird, **dadurch gekennzeichnet, dass** der Generator des Störsignals mit der Masse (M) über die Einrichtungen (11) zur Veränderung von Fy verbunden ist.

**2.** Gyrometer nach dem vorhergehenden Anspruch, **dadurch gekennzeichnet, dass** der Generator des Störsignals mit den Einrichtungen (11) zur Veränderung von Fy über die Regelschleife verbunden ist.

**3.** Gyrometer nach Anspruch 1 oder 2, **dadurch gekennzeichnet, dass** der Generator des Störsignals ein Oszillator (12') mit vorbestimmter Bezugsfrequenz $F_0$ ist.

**4.** Gyrometer nach einem der Ansprüche 1 bis 3, **dadurch gekennzeichnet, dass,** da das Gyrometer eine vorbestimmte Frequenzbandbreite hat, das Störsignal ein periodisches Signal mit der Frequenz $F_0$ ist, wobei $F_0$ höher als die Frequenzbandbreite des Gyrometers und niedriger als Fx ist.

**5.** Gyrometer nach Anspruch 1, das Einrichtungen (4) zur Anregung der Masse (M) gemäß y aufweist, die darauf abzielen, die durch die Coriolis-Kraft erzeugte Schwingung gemäß y auszugleichen, **dadurch gekennzeichnet, dass** der Generator des Störsignals über diese Anregungseinrichtungen (4) mit der Masse (M) verbunden ist.

**6.** Gyrometer nach dem vorhergehenden Anspruch, **dadurch gekennzeichnet, dass** es eine y-Anregungsschleife aufweist, und dass der Generator des Störsignals mit den Anregungseinrichtungen (4) über die y-Anregungsschleife verbunden ist.

**7.** Gyrometer nach Anspruch 5 oder 6, **dadurch gekennzeichnet, dass** der Generator des Störsignals ein spannungsgesteuerter Oszillator (12) ist.

**8.** Gyrometer nach einem der Ansprüche 5 bis 7, **dadurch gekennzeichnet, dass,** da das Gyrometer eine vorbestimmte Frequenzbandbreite hat, das Störsignal ein periodisches Signal ist, dessen Frequenz zwischen Fx - ΔF und Fx + ΔF gemäß einer Frequenz $F_0$ variiert, wobei $F_0$ höher als die Frequenzbandbreite des Gyrometers und niedriger als Fx ist, wobei ΔF gleich etwa 10 % Fx ist.

**9.** Gyrometer nach einem der Ansprüche 7 bis 8, **dadurch gekennzeichnet, dass** die Anregungseinrichtungen (4) Elektroden aufweisen.

**10.** Gyrometer nach einem der Ansprüche 3 bis 9, **dadurch gekennzeichnet, dass** die Regelschleife außerdem in Reihe geschaltet Einrichtungen (7) zur Formatierung des von den Erfassungseinrichtungen (3) stammenden Signals, eine Amplitudenerfassungsvorrichtung (13), ein Bandpassfilter (14) um die Bezugsfrequenz $F_0$ herum, einen synchronen Demodulator (15) der Bezugsfrequenz $F_0$ und einen Integrator-Entzerrer (16) aufweist, der mit den Einrichtungen (11) zur Veränderung der Frequenz Fy verbunden ist.

11. Gyrometer nach einem der vorhergehenden Ansprüche, **dadurch gekennzeichnet, dass,** da die Masse (M) mit einem steifen Rahmen (C) mit Hilfe von Federn gemäß x und y mit einer Steifigkeit Kx bzw. Ky verbunden ist, die Einrichtungen (11) zur Veränderung der Resonanzfrequenz Fy Elektroden zur Überwachung der Steifigkeit Ky aufweisen.

12. Gyrometer nach einem der vorhergehenden Ansprüche, **dadurch gekennzeichnet, dass** die Einrichtungen (3) zur Erfassung der in die Schwingung der Masse gemäß y induzierten Veränderung Elektroden aufweisen.

13. Gyrometer nach einem der Ansprüche 3 bis 12, **dadurch gekennzeichnet, dass,** da das Störsignal ein periodisches Signal mit vorbestimmter Bezugsfrequenz $F_0$ ist, dieses Störsignal ein Sinussignal oder ein Dreieckssignal ist.

14. Gyrometer nach einem der vorhergehenden Ansprüche, **dadurch gekennzeichnet, dass** das Gyrometer ein mikrobearbeitetes Gyrometer mit ebener Struktur ist, und dass die x- und y-Achsen sich in der Ebene der ebenen Struktur befinden.

15. Gyrometer nach einem der Ansprüche 1 bis 13, **dadurch gekennzeichnet, dass** das Gyrometer ein mikrobearbeitetes Gyrometer mit ebener Struktur ist, und dass die x-Achse sich in der Ebene der ebenen Struktur befindet, und die y-Achse sich nicht in der Ebene der ebenen Struktur befindet.

FIG.1

FIG.2

$|U_{dety}|$ (dB)

Secteur 2
$F_y = F_x$

Secteur 1
$F_y > F_x$

Secteur 3
$F_y < F_x$

Fréquence
d'excitation (Hz)
de $U_{excy}$

**FIG.3**

Tension de
commande de
la modulation
de $U_{excy}$

temps

a)

1/F0

Tension
d'excitation
$U_{excy}$

temps

b)

$F_x - \Delta F$          $F_x + \Delta F$

**FIG.4**

FIG.5a): $F_y > F_x$

FIG.5b): $F_y = F_x$

FIG.5c): $F_y < F_x$

$$\boxed{F_x \neq F_y}$$

Tension de
détection $U_{dety}$

$\Delta |U_{dety}|$

temps

## FIG.6a

Référence de
démodulation $F_0$

$1/F_0$

+1
-1

temps

## FIG.6b

Signal d'erreur e =
$\Delta |U_{dety}|$ après
démodulation

temps

## FIG.6c

EP 1 579 176 B1

FIG.7

FIG.8

Régulation d'amplitude — 6

Oscillateur — 5

Détection d'amplitude — 13

$U_{dety}$

Démodulation synchrone — 8

Mise en forme — 7

$|U_{dety}|$

Filtre passe-bande — 14

$F_0$

1   3

$K_x$   C

2

M

11   $K_y$   4

C

Démodulation synchrone — 15

Référence de fréquence $F_0$

e

Intégrateur correcteur — 16

Modulateur — 10

Correcteur — 9

V

Sortie gyro

$v_0 \sin(2\pi F_0 t)$

Oscillateur centré sur $F_0$ — 12′

EP 1 579 176 B1

**EP 1 579 176 B1**

## RÉFÉRENCES CITÉES DANS LA DESCRIPTION

**Documents brevets cités dans la description**

- WO 9815799 A
- US 5992233 A
- US 5747690 A
- EP 1554542 A